# FASCICULE DE BREVET EUROPEEN

(11) **EP 1 021 979 B1**
(45) Date de publication et mention de la délivrance du brevet: **17.03.2004**
(21) Numéro de dépôt: 00440017.2
(22) Date de dépôt: 21.01.2000
(51) Int. Cl.: A47J 27/62, F24C 7/08

(54) **Procédé et appareil de mise en température ou de cuisson d'une pluralité d'aliments mettant en oeuvre une sonde de mesure de la température à coeur dans un seul d'entre eux**
Verfahren und Vorrichtung zum Erhitzen oder Kochen von mehreren Nahrungsmitteln wobei die Kerntemperatur eines von diesen Mitteln mittels einer Temperaturprobe gemessen wird
Method and apparatus for heating or cooking a plurality of food products by using a temperature probe for measuring the core temperature of one of these products

(30) Priorité: 22.01.1999 FR 9900794
(43) Date de publication de la demande: 26.07.2000
(73) Titulaire: Rational AG, 86899 Landsberg/Lech (DE)
(72) Inventeur: Wagner, Stefan, 68127 Oberhergheim (FR); Gluck, Pascal, 68100 Mulhouse (FR)
(74) Mandataire: Schmid, Nils T.F.

(56) Documents cités:
- DE-A- 2 422 632
- DE-A- 19 609 116
- GB-A- 2 203 320
- US-A- 5 075 121

## Description

La présente invention se rapporte à un procédé de surveillance de la température à coeur et de conduite d'une mise en température ou d'une cuisson d'une pluralité d'aliments chauffés par un milieu fluide ou directement par un support solide chauffé ou chauffant à partir de la mesure de la température à coeur de l'un d'entre eux.

L'invention se rapporte également aux moyens destinés à mettre en oeuvre ce procédé c'est-à-dire à un appareil de mise en température et/ou de cuisson par l'intermédiaire d'un milieu fluide ou par le contact direct avec un support solide chauffé ou chauffant. Cet appareil est équipé d'un système de prise de la température à coeur d'un seul aliment pour la conduite de la mise en température et/ou de la cuisson d'une pluralité d'aliments cuits simultanément dans une même cuve ou sur une même plaque chauffante en mesurant et en surveillant la température à coeur d'un des aliments.

Dans les cuisines de collectivités, même de petites collectivités, il existe des appareils de mise en température et/ou de cuisson pouvant accueillir une quantité d'aliments supérieure à celle possible avec les appareils de cuisson présents dans une cuisine familiale connus sous la désignation générale d'appareils domestiques.

Cette quantité d'aliments est conditionnée par le nombre de personnes à nourrir, d'invités ou de clients et plus généralement par le nombre de consommateurs.

L'invention vise la restauration collective c'est-à-dire plus particulièrement les cuisines de communautés, de cantines, de restaurants, d'associations, de libres services de restauration.

Lorsque les aliments ne se présentent pas sous la forme d'une masse homogène, comme dans le cas de soupes, sauces, purées, crèmes... ils sont fractionnés ou apparaissent en volumes unitaires de taille plus ou moins grande correspondant par exemple à un organe, à un animal, à un végétal ou à une partie de celui-ci, par exemple un jambon, une langue, une volaille, un poisson... ou à toute autre unité alimentaire pouvant constituer un plat ou une partie de celui-ci.

Il existe également le cas d'aliments préparés en doses ou en portions individuelles conditionnées sous emballage protecteur en matière plastique et sous conservateur ou ambiance neutre ou sous vide. Ces aliments préparés sont souvent surgelés, distribués et conservés dans cet état.

Le cuisinier est amené à les mettre en température, à les cuire ou à terminer la phase de cuisson dans le cas des précuits.

Les observations sanitaires ont conduit à recommander, voire à contraindre les responsables de cuisines de collectivités et de restauration dans le cas des mises en température et dans certains cas de cuisson à atteindre et même dépasser pendant une durée minimale au coeur de l'aliment une température dite de sécurité sanitaire à partir de laquelle et après une durée minimale de maintien, tous les microorganismes et les germes pathogènes sont détruits.

Cette précaution permet d'éviter aux consommateurs le risque de troubles digestifs et de maladies transmises par les aliments insuffisamment cuits.

Elle ne s'applique pas à différents mets dont la cuisson ne peut atteindre cette température à coeur sans dénaturer entièrement le résultat tel que prévu par la recette.

Le DE 196 09 11 concerne un procédé de cuisson de produits alimentaires, par lequel la température à coeur de l'aliment chauffé est mesuré. Lors du procédé de cuisson, la température à coeur de l'aliment chauffé sera mesurée et surveillée en continu ou par intermittence. Sur la base de ces températures mesurées et sur la base d'une période de cuisson déterminée par le cuisinier, le moment final fictif sera déterminé en fonction duquel un procédé de cuisson aura été achevé de façon positive. Avec ce procédé connu, les erreurs d'estimation inévitables par rapport à la détermination de la période de cuisson pourront être corrigées grâce aux mesures de la température à coeur.

Un des objectifs de l'invention est de mesurer la température à coeur, de la surveiller et de pouvoir certifier en fin de mise en température ou de cuisson que la température de sécurité sanitaire a été atteinte voire dépassée et maintenue pendant la durée nécessaire pour obtenir le résultat de décontamination et de désinfection de sécurité sanitaire souhaité.

La certification permet le cas échéant de prouver que les obligations légales ont été respectées et de mettre hors de cause le responsable de la cuisine collective ou de restaurant.

Par ailleurs, devant le nombre d'aliments à surveiller et l'énergie à apporter rapidement pour la décongélation et la cuisson, les effets produits par les moyens de chauffe commandés selon un programme de cuisson ne sont pas exactement ceux attendus.

Il en résulte une cuisson approximative et on trouve dans le lot des aliments trop ou pas assez cuits.

Pour arriver à un résultat convenable, le cuisinier ou ses aides ont tendance à augmenter l'énergie de cuisson au détriment de certains aliments qui, alors trop cuits, sont peu présentables et peu goûteux pour être servis et appréciés des consommateurs.

La présente invention a comme autre objectif de piloter la cuisson d'une pluralité d'aliments en fonction de la température mesurée à coeur dans un seul d'entre eux et ceci avec la certitude d'une cuisson correcte et celle de respecter les obligations sanitaires relatives à la température de sécurité sanitaire.

La présente invention a pour but d'atteindre au moins ces deux objectifs et propose à cet effet un appareil et un procédé de mise en température et/ou de cuisson d'une pluralité d'aliments selon lequel on mesure et on surveille en continu ou par intermittence la température à coeur dans un seul d'entre eux pour pouvoir certifier que la température de sécurité sanitaire a bien été atteinte et maintenue pendant la durée minimale requise, on conduit puis on arrête la mise en température ou la cuisson lorsqu'une température intérieure finale prédéterminée est atteinte et ceci en fonction de la température à coeur et de sa situation par rapport à la température de sécurité sanitaire dont le maintien doit être poursuivi pendant une durée minimale.

On est assuré dès lors que les précautions sanitaires ont été respectées et on peut le prouver et le certifier. On est assuré aussi d'une mise en température ou d'une cuisson parfaite pour l'aliment échantillon mais aussi pour tous les autres aliments mis en température ou cuits simultanément.

On évite les multiples mesures ou surveillances de température en de nombreux endroits différents.

Bénéficiant d'un automatisme de déroulement de la phase de mise en température et/ou de cuisson, le cuisinier peut vaquer à d'autres occupations dans la cuisine, alléger son travail et diminuer sa tension nerveuse.

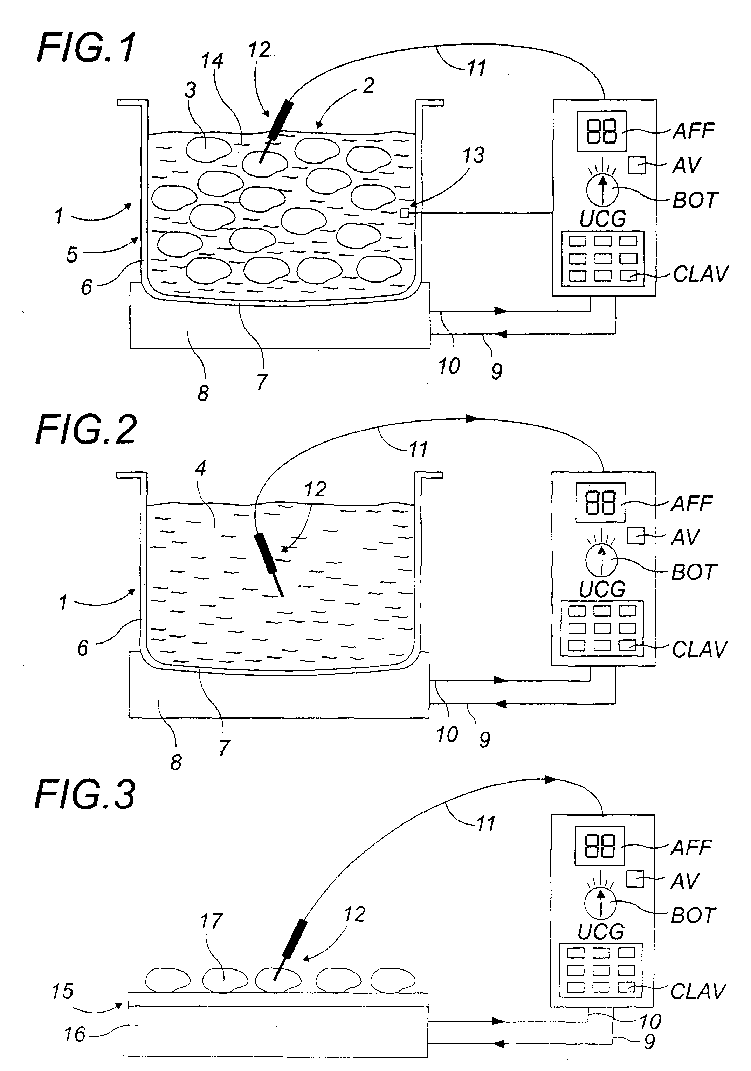

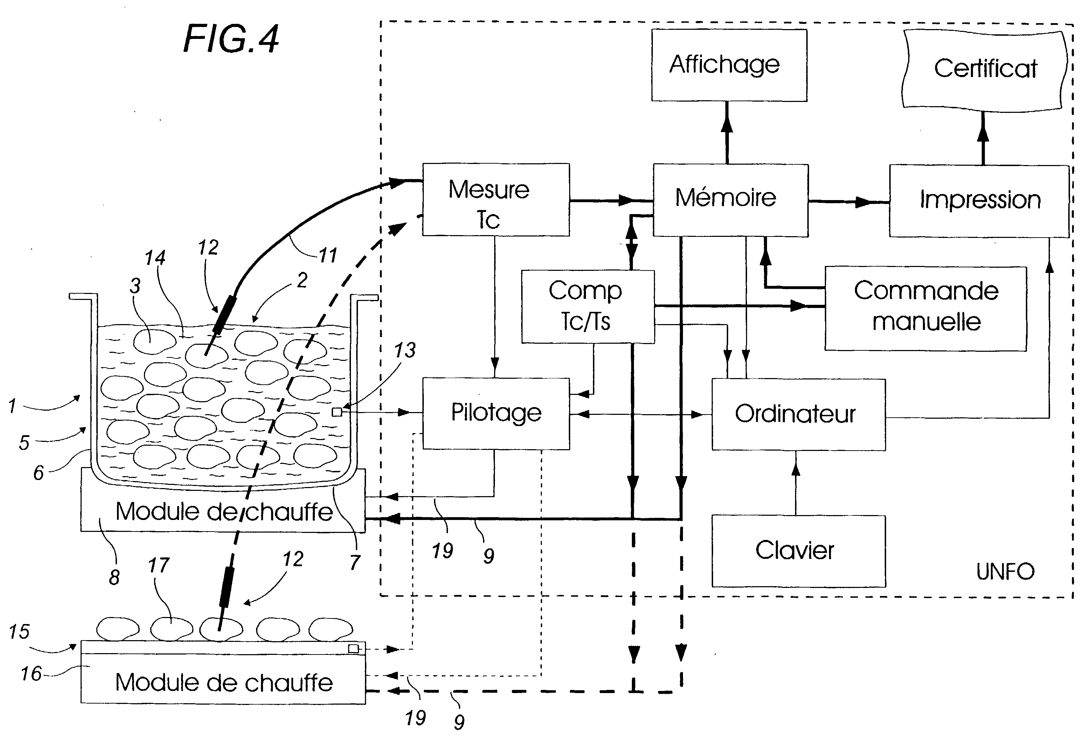

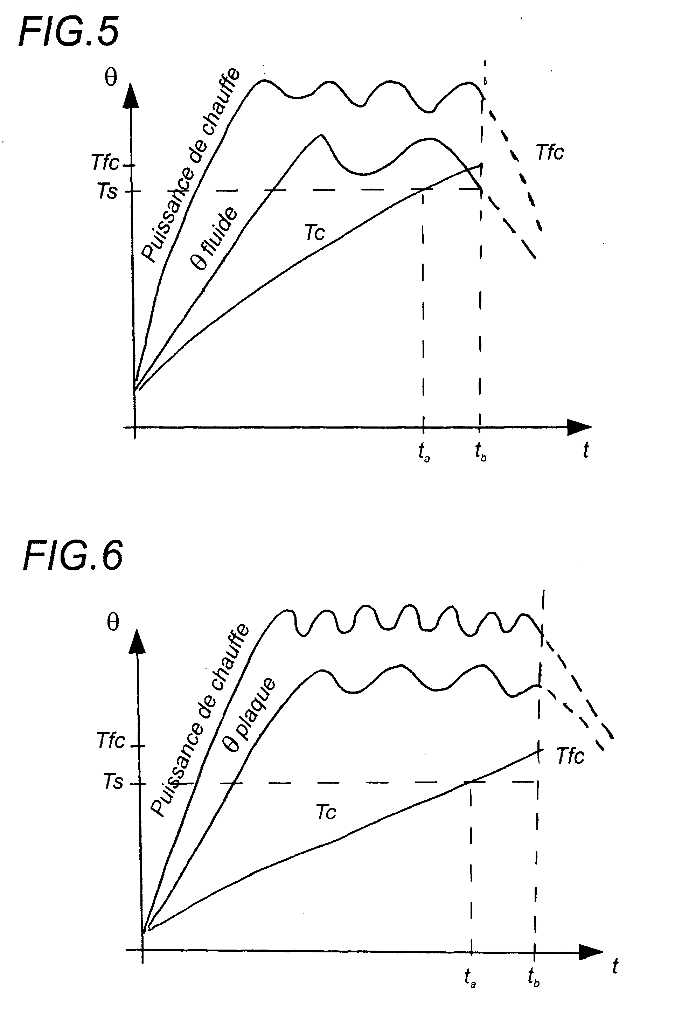

D'autres caractéristiques et avantages de la présente invention sont consignés dans la description qui suit effectuée à titre non-limitatif, en référence aux dessins accompagnants sur lesquels :
. la figure 1 est une vue schématique d'ensemble en coupe représentant un récipient de cuisson dans lequel sont immergés des aliments à mettre en température ou à cuire, l'un d'entre eux recevant une sonde à coeur pour la mesure de la température exploitée par une unité de contrôle et de commande des moyens de chauffe ;
. la figure 2 est une vue schématique d'ensemble en coupe représentant un récipient de cuisson contenant un aliment liquide, semi-liquide ou solide en contact avec les parois ;
. la figure 3 est une vue schématique d'ensemble en coupe représentant une plaque de cuisson portant plusieurs aliments dont l'un d'entre eux porte une sonde de mesure de la température à coeur Tc ;
. la figure 4 est une vue schématique générale d'ensemble montrant une réalisation avec simple mesure de température à coeur en tant qu'application principale et avec en option la conduite de la mise en température ou de la cuisson à partir de la mesure de la température à coeur Tc de l'un des aliments parmi la pluralité d'aliments à cuire et ceci en fonction de sa situation par rapport à la température Ts de sécurité sanitaire ;
. les figures 5 et 6 sont des courbes illustrant les variations de la température θ en fonction du temps t pour différents paramètres respectivement d'une mise en température ou d'une cuisson dans un milieu fluide pour la figure 5 et d'une mise en température ou d'une cuisson sur un support chauffé ou chauffant pour la figure 6 avec figuration des variations de la puissance de chauffe.

Sur ces courbes figurent, pour une mise en température ou une cuisson, l'évolution de la température à coeur Tc, la température finale à coeur Tfc, la température de sécurité sanitaire Ts, l'évolution de la température du fluide de cuisson ou celle des parois du récipient ou du support solide de cuisson et l'évolution de la puissance instantanée de chauffe.

On définit ici la température Ts dite de sécurité sanitaire comme la température souhaitable au coeur de l'aliment associée à une durée minimale D min de maintien ou à une durée maximale d'obtention pour réaliser la destruction ou l'inactivation totale et définitive de tout germe ou microorganisme pathogène pour le corps humain.

Les valeurs de ces paramètres dépendent des législations nationales et de la nature et du type de l'aliment. On peut citer à titre d'exemple les plages de valeurs suivantes :
Ts comprise entre 50 et 80°C
D min comprise entre 1 et 30 mn.

On examinera ci-après à titre d'exemple le cas d'un milieu de cuisson liquide utilisant par exemple une cuve de cuisson, mais aussi le cas d'une cuisson sur une plaque chauffante ou par contact direct avec les parois d'un récipient.

Bien entendu, d'autres milieux de cuisson et d'autres types d'appareils de cuisson sont visés par l'invention. Pour cette raison, on utilisera l'expression plus générale de milieu fluide de cuisson.

De plus, le terme pluralité d'aliments doit être compris dans son sens le plus général, ce qui lui permet de couvrir un nombre important de combinaisons depuis la plus faible, celle à deux aliments, jusqu'à des grands nombres correspondant à la capacité totale des appareils les plus volumineux.

La présente invention couvre tous les types de cuissons : friture, cuisson à l'eau, grillade, bain-marie, cuisson à la vapeur, cuisson autoclave...

On distinguera également d'une part la mise en température qui correspond à la décongélation et à un réchauffage des aliments déjà cuits ou précuits et d'autre part la cuisson qui comporte aussi une phase d'élévation de la température. Cependant, concernant les appareils, on peut se contenter de dénommer tous les appareils visés, appareils de cuisson, car ceux-ci permettent aussi généralement une mise en température.

L'appareil de cuisson selon l'invention se compose dans sa généralité d'un récipient 1 apte à contenir des aliments tels que 2 en volumes unitaires tels que 3 ou en masse par exemple homogène 4 liquide, semi-liquide, pâteuse ou même solide.

Le récipient de cuisson 1 est par exemple du type cuve 5 de cuisine collective à parois latérales 6 et à fond 7.

La cuve 5, ou plus généralement le récipient 1, est porté à la température de cuisson par un module de chauffe 8 en contact direct avec le fond 7.

Ce module de chauffe fonctionne en général mais non exclusivement à l'énergie électrique. Il présente une puissance de chauffe thermostatée réglable ou modulable ou plusieurs allures de chauffe. La puissance peut être commandée manuellement ou par l'intermédiaire d'un circuit de pilotage.

On décrira ci-après l'appareil de cuisson et plusieurs de ses variantes représentés sur les figures 1, 2 et 3 permettant de mettre en oeuvre le procédé selon l'invention.

Le fonctionnement de l'appareil de cuisson est assuré par une unité de commande et de gestion UCG regroupant les principales fonctions de marche, de mesure et de surveillance de la température à coeur, de commande et de sécurité.

Des liaisons de commande 9 et de surveillance 10 d'un module de chauffe 8 ainsi qu'une liaison de mesure 11 à partir d'une sonde 12 de température à coeur d'un aliment arrivent à l'unité UCG.

D'autres capteurs de température peuvent être également prévus. Il s'agit d'abord d'un capteur de température 13 du milieu de cuisson, par exemple du liquide 14 de cuisson ou de mise en température et d'un ou de plusieurs capteurs de la température des parois.

Ces capteurs ne sont pas représentés car ils n'interviennent qu'à titre de sécurité.

L'unité UCG présente également un afficheur et des moyens sous la forme d'un clavier CLAV ou d'un bouton BOT faisant défiler des valeurs pour le choix et la validation de la température finale à coeur Tfc provoquant l'arrêt de la cuisson. Un avertisseur AV visuel ou sonore ou les deux à la fois permet de signaler à l'utilisateur la fin de la cuisson ou de la mise en température.

L'appareil comprend également des moyens pour entrer dans le système une valeur de température Ts devant être atteinte et maintenue pendant D min.

Lorsque l'aliment est sous la forme d'une masse alimentaire 4 liquide, semi-liquide, pâteuse ou même solide, la mesure de la température à coeur s'effectue en plongeant la sonde au milieu du volume alimentaire.

Le cas d'une table de cuisson 15 peut être déduit du précédent en supposant que la cuve ne comporte qu'un fond constituant le plan de cuisson chauffé par un module de chauffe 16 (figure 3).

Dans ce cas, les aliments 17 reposent directement sur le plan de cuisson qui les cuit par le dessous. Il s'agit en général d'un support solide du type plaque chauffée par le dessous par un module de chauffe adapté 16.

Un autre appareil de cuisson pouvant se présenter sous deux versions est représenté sur la figure 4. Il permet également de mettre en oeuvre le procédé selon l'invention.

Les éléments communs avec le précédent appareil (figures 1, 2, 3) portent les mêmes numéros de référence.

Dans sa première version, il comprend une cuve 5 chauffée par un module de chauffe 8 raccordé par des liaisons de commande 9 et une liaison de pilotage 19 à une unité de fonctionnement UNFO.

Une sonde de mesure 12 reliée par une liaison 11 à UNFO mesure la température à coeur Tc de l'aliment. Un capteur de température 13 mesure la température du milieu de cuisson 14.

Selon une deuxième variante, la cuve 5 de mise en température et de cuisson directe des aliments 17 se trouve sur un support du type plaque 15 chauffée par le dessous par un module adapté 16.

Les mêmes liaisons 9 et 19 existent avec l'unité UNFO.

On décrira maintenant la composition interne de l'unité UNFO qui se greffe sur la commande habituelle de puissance des moyens de chauffe.

Il existe dans cette unité de fonctionnement une chaîne de base dont les liaisons entre les modules fonctionnels sont représentées en traits forts. Celle-ci permet la mesure en continu ou par intermittence de la température à coeur Tc, sa surveillance, son suivi, sa mise en mémoire, son affichage et l'édition sur un support papier de son évolution (historique) pendant la durée de la mise en température ou de la cuisson.

La chaîne de mesure et de surveillance se compose, à partir de la sonde de mesure 12 et de sa liaison 11 des modules fonctionnels suivants.

La sonde 12 est raccordée à un module MESURE destiné à délivrer une valeur représentative de la température instantanée à coeur Tc. Cette valeur est mise en continu ou par intermittence en mémoire dans un module MEMOIRE et peut être affichée sur un module AFFICHAGE.

La valeur de Tc mise en mémoire est comparée en continu dans un module COMP à la valeur de sécurité sanitaire Ts en vue d'avertir l'opérateur si la température Tc n'atteint pas Ts en fin de cuisson.

Un module de COMMANDE MANUELLE est relié au module MEMOIRE pour permettre d'effectuer manuellement les modifications souhaitées des paramètres (température, durée) pendant la cuisson.

Les modules MEMOIRE et COMP sont reliés au MODULE DE CHAUFFE en vue de commander les moyens de chauffe.

Un bloc IMPRESSION a pour but d'éditer sur papier un CERTIFICAT daté et personnalisé, destiné à servir de preuve juridique en cas de recherche de responsabilité.

L'unité de fonctionnement UNFO permet également de conduire le déroulement d'une mise en température ou d'une cuisson à partir de caractéristiques mises en mémoire dans l'unité de MEMOIRE ou par un ORDINATEUR interne ou externe relié à un CLAVIER et au module IMPRESSION.

L'ordinateur se greffe sur la chaîne existante ainsi qu'une unité PILOTAGE qui intervient à partir de la valeur Tc, de sa comparaison avec Ts et des caractéristiques de la recette utilisée pour commander les moyens de chauffe.

A cet effet, cette unité PILOTAGE est reliée vers l'extérieur au MODULE DE CHAUFFE et au capteur 13 de température du fluide de cuisson et à l'intérieur à ORDINATEUR, au module COMP et au module MESURE.

L'ensemble avec les modules de la chaîne de base constitue une unité de fonctionnement UNFO permettant le pilotage des moyens de chauffe à partir de la température Tc.

Le procédé de mesure de la température à coeur et de la conduite de la mise en température ou de celle de la cuisson selon l'invention sera décrit dans sa généralité ci-après en utilisant les moyens exposés ci-dessus.

Le procédé selon l'invention consiste de façon générale à mesurer en permanence ou par intermittence la température à coeur Tc d'un seul aliment parmi une pluralité d'autres aliments qui sont mis en température ou cuits simultanément dans un même récipient ou sur une même plaque chauffante, ou d'une zone limitée d'une masse alimentaire, à afficher et mettre en mémoire puis imprimer les différentes valeurs de cette température à coeur Tc, à surveiller Tc par rapport à Ts et à commander en continu ou par intermittence les moyens de chauffe de l'appareil de cuisson, à surveiller la température des parois chauffantes ou celle du milieu fluide de chauffe ou de cuisson et à arrêter les moyens de chauffe dès que la température à coeur atteint une valeur finale Tfc prédéterminée.

Selon une première variante on s'assure pendant toute la phase de mise en température ou de cuisson que la température à coeur Tc a atteint ou dépassé la température Ts de sécurité sanitaire pendant une durée minimale D min.

Selon une autre variante du procédé, on arrête la mise en température ou la cuisson dès que la température Ts est atteinte.

Selon une autre variante encore, la température de fin de mise en température ou de cuisson est inférieure à Ts tout en pouvant l'avoir dépassée pendant le déroulement du procédé.

Selon une dernière variante qui ne s'applique qu'à la mise en température, on impose une durée maximale à Tc pour atteindre Ts par exemple une durée d'une heure.

Le procédé de base tel que décrit ci-dessus peut être mis en oeuvre par la chaîne de base apparaissant sur la figure 4. Il s'agit de la chaîne ressortant visuellement par des liaisons en traits forts existant entre ses modules.

Comme indiqué, sur cette chaîne de base peuvent se greffer divers autres modules permettant de mettre en oeuvre une variante élaborée du procédé selon l'invention.

Selon cette variante du procédé de base, on mesure la température Tc à coeur, on surveille celle-ci par rapport à la température Ts de sécurité sanitaire et on commande les moyens de chauffe pour que celle-ci atteigne Ts pendant une durée minimale D min suffisante pour permettre la destruction ou l'inactivation totale des germes et microorganismes pathogènes et on procède simultanément au pilotage des moyens de chauffe pour la mise en température ou pour la cuisson à partir de la température Tc et d'un programme de mise en température ou de cuisson interne, conduit manuellement ou préenregistré sur un support interne ou externe.

A cet effet, le module PILOTAGE commande les moyens de chauffe à partir de la valeur instantanée Tc de la température à coeur en vérifiant tout au long de la cuisson la position de sa valeur par rapport à Ts et en commandant les moyens de chauffe pour qu'elle atteigne Ts pendant D min et ceci grâce aux informations fournies par le module de comparaison COMP.

Un ORDINATEUR intérieur ou extérieur permet d'assister le module de pilotage en liaison avec COMP et le module MEMOIRE. Il permet aussi de conduire la cuisson à partir de recettes supplémentaires enregistrées sur son disque dur ou sur des supports amovibles.

La commande des moyens de chauffe peut résulter alors d'une commande programmée c'est-à-dire enregistrée et d'un correctif apporté en continu par la mesure permanente de Tc.

La valeur de Tc et son évolution peuvent être imposées. Dans ce cas, la commande des moyens de chauffe sera directement fonction de Tc en tenant compte de l'inertie de ces moyens de chauffe et du milieu intermédiaire jusqu'à la sonde 12 de mesure à coeur.

On décrira maintenant des exemples de phases de cuisson à l'aide des courbes représentées sur les dessins et en prenant comme exemple, successivement, une série de pièces de viande, puis des aliments emballés sous vide en doses individuelles.

### Pièces de viande cuites à l'eau

L'exemple porte sur une pluralité de blocs de viande par exemple des blocs de jambon cuits simultanément.

On choisit un bloc placé au centre de la cuve. On y enfonce à coeur la sonde 12 de mesure de la température à coeur.

La phase de cuisson débute par la mise en chauffe du liquide de cuisson.

La température à coeur Tc est surveillée en permanence pour être comparée à la température Ts de sécurité sanitaire et à la température idéale correspondant à celle de la recette selon la courbe optimale conforme au programme de cuisson choisi. La température finale à coeur Tfc peut être également un choix de départ entré et validé dans l'appareil ou programmé. Cette valeur dépend du goût des consommateurs et de la nature et de la particularité du produit. Elle doit pouvoir être modifiée tout en restant de préférence supérieure à Ts.

Elle n'est pas supérieure à Ts si Ts a déjà été atteinte ou dépassée en cours de mise en température ou de cuisson.

Les moyens de chauffe sont pilotés en fonction de la température intérieure instantanée Tc au coeur de l'aliment et de la valeur théorique de la même température sur la courbe idéale.

La fin de la cuisson est déterminée par l'arrivée à une température finale à coeur Tfc de l'aliment signalée par un avertisseur AV lumineux ou sonore ou les deux à la fois. Lorsque celle-ci est atteinte, les moyens de chauffe sont coupés au temps t_{b} après avoir dépassé la température Ts au temps tₐ.

### Aliments en portions individuelles sous vide et surgelés

La mise en température ou la cuisson se déroule suivant le même principe pour les aliments surgelés, en portions individuelles sous vide. Selon le cas et le type de sonde, celle-ci ne pourra être enfoncée au coeur de l'aliment dans l'emballage choisi qu'après une phase préalable de décongélation.

On perfore l'emballage et l'aliment représentatif pour y introduire la sonde de mesure à coeur.

Le pilotage des moyens de chauffe est réalisé en tenant compte de l'emballage sous vide. A cet effet, un correctif est apporté par rapport à la courbe sans emballage. On peut établir une courbe ou un tableau spécifique correspondant à l'aliment sous vide.

Ici également, la cuisson est arrêtée au temps t_{b} lorsqu'une température prédéterminée par exemple affichée au départ est atteinte au coeur de l'aliment.

### Aliment sous la forme d'une masse par exemple homogène

La masse alimentaire peut présenter diverses consistances depuis l'état liquide jusqu'à un état pratiquement solide.

Elle est contenue dans un récipient chauffé par le bas par les moyens de chauffe.

Les exemples que l'on peut citer sont ceux des soupes, des sauces, des crèmes, des mousses, des gelées, des flans, des pâtes....

On conduit la cuisson à partir de la température mesurée au centre de la masse alimentaire (figure 2) et on la stoppe au temps t_{b} lorsqu'elle atteint une température prédéterminée.

### Les courbes

Les courbes représentées sur les figures 5 et 6 nous montrent les variations dans le temps de la température à coeur Tc, de la puissance de chauffe et de la température du fluide de mise en température ou de cuisson ou celle du support chauffant ou chauffé par exemple une plaque de cuisson ou les parois d'un récipient.

On remarque que la puissance augmente rapidement et est modulée ensuite jusqu'au temps d'arrêt t_{b}, la modulation de la puissance permettant d'éviter les inconvénients et les détériorations des aliments dus à la surchauffe.

Les exemples représentés sont ceux d'une mise en température ou d'une cuisson pour lesquelles le dépassement de Tc s'effectue au delà de Ts. A l'instant tₐ, la température à coeur Tc atteint la température de sécurité sanitaire Ts et s'y maintient ou la dépasse jusqu'à l'instant t_{b} qui peut être confondu avec la température de fin de la cuisson Tfc. Le dépassement ou le maintien s'effectue pendant la durée D=t_{b}-tₐ qui doit être au moins égale à la durée minimale D min recommandée ou légale de destruction des germes et des microorganismes pathogènes.

Le certificat édité après chaque cuisson ou mise en température ou sur demande montre par les chiffres que cette obligation a été respectée.

## Revendications

1. Procédé de cuisson ou de mise en température dans un récipient (1), une cuve (5) ou tout autre contenant ou enceinte, ou sur une plaque (15) chauffante ou chauffée d'une pluralité d'aliments (3) ou d'une pluralité de masses alimentaires (4) par l'intermédiaire de moyens de chauffe (8, 16) à puissance modulable ou à plusieurs allures de chauffe,
- en mesurant en continu ou par intermittence la température à coeur Tc dans un seul des aliments de la pluralité d'aliments mis en température ou cuits simultanément dans le même récipient ou dans la même enceinte ou sur la même plaque chauffante ou chauffée tout au long du déroulement de la mise en température ou de la cuisson,
- en enregistrant en mémoire les différentes valeurs de la température Tc,
en affichant les valeurs mesurées de la température Tc,
en stoppant les moyens de chauffe (8, 16) lorsque la température à coeur Tc atteint une valeur finale Tfc prédéterminée,
**caractérisée en ce que**:
on surveille cette température Tc par rapport à une température de sécurité sanitaire Ts,
- on agit en continu ou par intermittence pendant la mise en température ou pendant la cuisson sur les moyens de chauffe de façon automatique ou manuelle pour arriver, à la fin de la mise en température ou de la cuisson, à ce que Tc ait atteint au moins la température Ts avant ou au moment de la fin de la cuisson ou de la mise en température,
- on imprime un certificat faisant ressortir les différentes valeurs de Tc tout au long du procédé.

2. Procédé selon la revendication 1 **caractérisé en ce que** l'on compare en continu ou par intermittence pendant la mise en température ou pendant la cuisson la valeur de la température Tc à la température Ts et **en ce que** l'on agit en continu ou par intermittence pendant la mise en température ou pendant la cuisson sur les moyens de chauffe de façon automatique ou manuelle pour arriver, à la fin de la mise en température ou de la cuisson, à ce que Tc ait atteint ou dépassé la température Ts au moins une fois pendant une durée minimale D min.

3. Procédé selon la revendication 1 ou 2 **caractérisé en ce que** l'on pilote les moyens de chauffe à partir de la température Tc en fonction d'un programme de déroulement d'une mise en température ou d'une cuisson conduit manuellement ou préenregistré sur un support interne ou externe.

4. Procédé selon la revendication 1 ou 2 ou 3 **caractérisé en ce que** la mise en température ou la cuisson s'effectue sur une pluralité d'aliments (3) baignant dans un milieu liquide de cuisson.

5. Procédé selon la revendication 1 ou 2 ou 3 **caractérisé en ce que** la mise en température ou la cuisson s'effectue sur une pluralité d'aliments (3) renfermés dans un volume sous pression.

6. Procédé selon la revendication 1 ou 2 ou 3 **caractérisé en ce que** la mise en température ou la cuisson s'effectue sur une pluralité d'aliments (3) reposant sur une plaque de cuisson (15).

7. Procédé selon la revendication 1 ou 2 ou 3 **caractérisé en ce que** la pluralité d'aliments est une masse alimentaire (4) occupant le volume intérieur d'une cuve (5) ou la surface d'une plaque de cuisson (15).

8. Procédé selon la revendication 1 ou 2 ou 3 **caractérisé en ce que** l'on surveille à partir d'un capteur (13) la température du milieu de cuisson.

9. Procédé selon la revendication 1 ou 2 ou 3 **caractérisé en ce que** la valeur de Ts est comprise entre 50 et 80°C.

10. Procédé selon la revendication 2 **caractérisé en ce que** la valeur de D min est comprise entre 1 et 30 mn.

11. Procédé selon la revendication 1 ou 2 ou 3 **caractérisé en ce que** la température Tc atteint Ts en une durée maximale de une heure.

12. Appareil de cuisson ou de mise en température pour cuisines collectives et restaurants destiné à mettre en oeuvre le procédé selon l'une quelconque des revendications précédentes, l'appareil se composant d'un récipient (1) ou d'une cuve (5) contenant une pluralité d'aliments à mettre en température ou à cuire ou d'une table de cuisson (15) sur laquelle repose une pluralité d'aliments à mettre en température ou à cuire en liaison avec des moyens de chauffe (8, 16) pour la mise en température ou la cuisson, d'une sonde (12) de mesure de la température Tc à coeur d'un seul aliment parmi la pluralité d'aliments à mettre en température ou à cuire, **caractérisé en ce qu'**il se compose d'une unité de commande et de gestion UCG pour la mesure et la surveillance de la température Tc à coeur par rapport à la température Ts de sécurité sanitaire, pour la commande des moyens de chauffe (8, 16) à partir de la température à coeur Tc et en fonction de sa position par rapport à Ts et à sa durée minimale D min de maintien à Ts et pour arrêter ces moyens lorsque la température à coeur Tc a atteint une valeur finale prédéterminée Tfc, et d'un moyen d'imprimer un certificat faisant ressortir les différentes valeurs de la température à coeur Tc tout au long du procédé.

13. Appareil selon la revendication 12 **caractérisé en ce que** l'unité de commande et de gestion UCG comporte un afficheur AFF et des moyens pour entrer dans le système une valeur de température Ts devant être atteinte et maintenue pendant D min et une température finale à coeur Tfc marquant la fin de la cuisson.

14. Appareil selon la revendication 12 ou 13 **caractérisé en ce que** les capteurs, la sonde (12) et le module de chauffe sont reliés à une unité de fonctionnement UNFO présentant une chaîne de base permettant la mesure, la surveillance et le suivi en continu ou par intermittence de la température Tc à coeur d'un des aliments ainsi que l'impression d'un certificat faisant ressortir les valeurs de Tc au cours du temps de fonctionnement, la sonde de mesure (12) étant raccordée à un module de mesure MESURE destiné à délivrer une valeur représentative de la température instantanée à coeur Tc, cette valeur étant mise en continu ou par intermittence en mémoire dans un module MEMOIRE et pouvant être affichée sur un module AFFICHAGE relié au module MEMOIRE lui même relié à un module de comparaison COMP en continu ou par intermittence entre Tc et Ts, un module de COMMANDE MANUELLE est relié au module MEMOIRE pour permettre d'effectuer manuellement les modifications souhaitées des paramètres (température, durée) pendant la cuisson, les modules MEMOIRE et COMP étant reliés au MODULE DE CHAUFFE en vue de commander les moyens de chauffe.

15. Appareil selon la revendication précédente **caractérisé en ce que** la chaîne de base est complétée par un ORDINATEUR interne ou externe et par un module PILOTAGE relié à l'ordinateur, au module MESURE et au module COMP en vue de conduire le déroulement d'une mise en température ou d'une cuisson à partir de la température Tc, en tenant compte de la température Ts et en fonction des caractéristiques d'une mise en température ou d'une cuisson mémorisées dans une mémoire ou sur un support d'enregistrement interne ou externe fixe ou amovible.

## Claims

1. Process for cooking or heating, in a receptacle (1), a vessel (5) or any other container or enclosure or on a heating or heated plate (15), a plurality of food items (3) or a plurality of food masses (4) using heating means (8, 16), of which the power can be modulated or which have a number of heating rates,
- by continuously or intermittently measuring the core temperature Tc in only one of the food items of the plurality of food items heated or cooked simultaneously in the same receptacle or in the same enclosure or on the same heating or heated plate throughout the course of the heating or cooking process,
- by recording in a memory the different values of the temperature Tc,
displaying the measured values of the temperature Tc
stopping the heating means (8, 16) when the core temperature Tc reaches
a predetermined final value Tfc,
**characterised in that**:
this temperature Tc is monitored with respect to a hygiene safety temperature Ts,
- the heating means are automatically or manually adjusted in a continuous or intermittent manner during the heating or cooking process in order to ensure, at the end of the heating or cooking process, that Tc has reached at least the temperature Ts before or at the time of the end of the cooking or heating process,
- a notice is printed showing the different values of Tc throughout the process.

2. Process as claimed in claim 1, **characterised in that** the value of the temperature Tc is continuously or intermittently compared with the temperature Ts during the heating or cooking process, and **in that** the heating means are automatically or manually adjusted in a continuous or intermittent manner during the heating or cooking process in order to ensure, at the end of the heating or cooking process, that Tc has reached or exceeded the temperature Ts at least once for a minimum duration D min.

3. Process as claimed in claim 1 or 2,
**characterised in that** the heating means are controlled on the basis of the temperature Tc according to a programme controlling the course of a heating or cooking process, carried out manually or pre-recorded on an internal or external medium.

4. Process as claimed in claim 1 or 2 or 3,
**characterised in that** the heating or cooking process is carried out on a plurality of food items (3) immersed in a liquid cooking medium.

5. Process as claimed in claim 1 or 2 or 3,
**characterised in that** the heating or cooking process is carried out on a plurality of food items (3) enclosed in a pressurised space.

6. Process as claimed in claim 1 or 2 or 3,
**characterised in that** the heating or cooking process is carried out on a plurality of food items (3) lying on a cooking plate (15).

7. Process as claimed in claim 1 or 2 or 3,
**characterised in that** the plurality of food items is a food mass (4) occupying the internal space of a vessel (5) or the surface of a cooking plate (15).

8. Process as claimed in claim 1 or 2 or 3,
**characterised in that** the temperature of the cooking medium is monitored from a sensor (13).

9. Process as claimed in claim 1 or 2 or 3,
**characterised in that** the value of Ts is between 50 and 80°C.

10. Process as claimed in claim 2, **characterised in that** the value of D min is between 1 and 30 minutes.

11. Process as claimed in claim 1 or 2 or 3,
**characterised in that** the temperature Tc reaches Ts in a maximum period of one hour.

12. Cooking or heating apparatus for large-scale kitchens and restaurants, intended to implement the process as claimed in any one of the preceding claims, the apparatus being composed of a receptacle (1) or a vessel (5) containing a plurality of food items to be heated or cooked, or a cooking table (15) on which lie a plurality of food items to be heated or cooked, connected to heating means (8, 16) to carry out the heating or cooking process, of a probe (12) for measuring the temperature Tc at the core of a single food item among the plurality of food items to be heated or cooked, **characterised in that** it is composed of a control and management unit UCG for measuring and monitoring the core temperature Tc with respect to the hygiene safety temperature Ts, for controlling the heating means (8, 16) on the basis of the core temperature Tc and according to its situation with respect to Ts and to its minimum duration D min for maintenance at Ts, and for stopping these means when the core temperature Tc has reached a predetermined final value Tfc, and of a means for printing a notice showing the different values of the core temperature Tc throughout the process.

13. Apparatus as claimed in claim 12, **characterised in that** the control and management unit UCG has a display AFF and means for inputting into the system a temperature value Ts which must be reached and maintained for D min and a final core temperature Tfc marking the end of the cooking process.

14. Apparatus as claimed in claim 12 or 13,
**characterised in that** the sensors, the probe (12) and the heating module are connected to an operating unit UNFO having a basic system permitting measurement, monitoring and tracking in a continuous or intermittent manner of the core temperature Tc of one of the food items as well as printing of a notice showing the values of Tc during the operating time, the measuring probe (12) being connected to a measuring module MEASURE intended to output a value representative of the momentary core temperature Tc, this value being continuously or intermittently stored in a MEMORY module and being able to be displayed on a DISPLAY module connected to the MEMORY module which is itself connected to a comparison module COMP continuously or intermittently between Tc and Ts, a MANUAL CONTROL module is connected to the MEMORY module in order to permit the desired modifications of the parameters (temperature, duration) to be carried out manually during the cooking process, the MEMORY and COMP modules being connected to the HEATING MODULE in order to control the heating means.

15. Apparatus as claimed in the preceding claim,
**characterised in that** the basic system is complemented by an internal or external COMPUTER and by a CONTROL module connected to the computer, to the MEASURE module and to the COMP module in order to direct the course of a heating or cooking process on the basis of the temperature Tc, taking account of the temperature Ts and according to the heating or cooking characteristics stored in a memory or on a fixed or moveable, internal or external recording medium.

## Patentansprüche

1. Verfahren zum Garen oder Erwärmen von mehreren Lebensmitteln (3) oder von mehreren Lebensmittelmassen (4) in einem Behälter (1), einer Wanne (5) oder jedem anderen Behältnis oder auf einer wärmenden oder erwärmten Platte (15) durch eine Heizeinrichtung (8, 16), die modulierbar ist oder unterschiedliche Erwärmungsgeschwindigkeiten aufweist,
- wobei während des Ablaufs des Erwärmens oder Garens die Kemtemperatur Tc ständig oder mit Unterbrechung in einem einzigen Lebensmittel der mehreren Lebensmittel gemessen wird, die im selben Behälter oder im selben Behältnis oder auf derselben wärmenden oder erwärmten Platte erwärmt oder gegart werden,
- wobei die unterschiedlichen Werte der Kemtemperatur Tc in einem Speicher gespeichert werden,
wobei die Meßwerte der Temperatur Tc angezeigt werden,
wobei die Heizeinrichtung (8, 16) abgeschaltet wird, wenn die Kemtemperatur Tc einen vorbestimmten Endwert Tfc erreicht hat,
**dadurch gekennzeichnet,daß**:
diese Temperatur Tc im Hinblick auf eine sanitäre Sicherheitstemperatur Ts hin überwacht wird,
- während des Erwärmens oder des Garens automatisch oder manuell auf die Heizeinrichtung ständig oder mit Unterbrechung eingewirkt wird, damit am Ende des Erwärm- oder Garvorgangs die Kemtemperatur Tc zumindest die Temperatur Ts vor oder zum Endzeitpunkt des Garens oder Erwärmens erreicht,
- ein Zertifikat ausgedruckt wird, das die unterschiedlichen Werte von Tc während des gesamten Verfahrens angibt.

2. Verfahren nach Anspruch 1, **dadurch gekennzeichnet, daß** der Wert der Kemtemperatur Tc während des Erwärmens oder während des Garens ständig oder mit Unterbrechung mit der Temperatur Ts verglichen wird und daß automatisch oder manuell ständig oder mit Unterbrechung während des Erwärmens oder Garens auf die Heizeinrichtung eingewirkt wird, um zu erreichen, daß die Kerntemperatur Tc am Ende des Erwärmens oder Garens die Temperatur Tc mindestens einmal während der minimalen Dauer Dmin erreicht oder überschritten hat.

3. Verfahren nach Anspruch 1 oder 2, **dadurch gekennzeichnet, daß** die Heizeinrichtung ausgehend von der Temperatur Tc abhängig von einem Ablaufprogramm zum Erwärmen oder Garen gesteuert wird, welches Ablaufprogramm manuell gesteuert wird oder auf einem internen oder externen Datenträger vorab gespeichert wird.

4. Verfahren nach Anspruch 1 oder 2 oder 3, **dadurch gekennzeichnet, daß** das Erwärmen oder Garen an mehreren Lebensmitteln (3) durchgeführt wird, die in einer flüssigen Kochatmosphäre schwimmen.

5. Verfahren nach Anspruch 1 oder 2 oder 3, **dadurch gekennzeichnet, daß** das Erwärmen oder Garen an mehreren Lebensmitteln (3) durchgeführt wird, die in einem unter Druck stehenden Volumen eingeschlossen werden.

6. Verfahren nach Anspruch 1 oder 2 oder 3, **dadurch gekennzeichnet, daß** das Erwärmen oder Garen an mehreren Lebensmitteln (3) durchgeführt wird, die auf einer Kochplatte (15) liegen.

7. Verfahren nach Anspruch 1 oder 2 oder 3, **dadurch gekennzeichnet, daß** die mehreren Lebensmittel eine Lebensmittelmasse (4) sind, die das Innenvolumen einer Wanne (5) oder die Oberfläche einer Kochplatte (15) einnimmt.

8. Verfahren nach Anspruch 1 oder 2 oder 3, **dadurch gekennzeichnet, daß** ein Meßfühler (13) vorgesehen ist, der die Temperatur im Garmedium überwacht.

9. Verfahren nach Anspruch 1 oder 2 oder 3, **dadurch gekennzeichnet, daß** der Wert von Ts zwischen 50 und 80° liegt.

10. Verfahren nach Anspruch 2, **dadurch gekennzeichnet, daß** der Wert von Dmin zwischen einer Minute und 30 Minuten liegt.

11. Verfahren nach Anspruch 1 oder 2 oder 3, **dadurch gekennzeichnet, daß** die Temperatur Tc die Temperatur Ts innerhalb einer maximalen Dauer von einer Stunde erreicht.

12. Gerät zum Garen und Erwärmen für Gemeinschaftsküchen und Restaurants, das zum Anwenden des Verfahrens nach einem der vorangegangenen Ansprüche ausgelegt ist, wobei das Gerät einen Behälter (1) oder eine Wanne (5), die mehrere zu erwärmende oder zu garende Lebensmittel aufnehmen kann, oder eine Kochplatte (15), auf der mehrere zu erwärmende und zu garende Lebensmittel liegen, wobei sie mit einer Heizeinrichtung (8, 16) zum Erwärmen oder zum Garen verbunden ist, eine Sonde (12) zum Messen einer Kemtemperatur Tc eines einzigen Garguts unter den mehreren zu erwärmenden oder zu garenden Lebensmitteln umfaßt, **dadurch gekennzeichnet, daß** es eine Steuerungs- und Regelungseinheit (UCG) zum Messen und Überwachen der Kerntemperatur Tc bezüglich einer sanitären Sicherheitstemperatur Ts, zum Steuern der Heizeinrichtung (8, 16) auf der Basis der Kerntemperatur Tc und abhängig von ihrem Wert in bezug auf Ts und von ihrer minimalen Dauer Dmin des Beibehaltens von Ts und zum Abschalten der Heizeinrichtung, sobald die Kerntemperatur Tc einen vorbestimmten Endwert Tfc erreicht hat, sowie eine Druckeinrichtung zum Ausdrucken eines Zertifikats umfaßt, das die unterschiedlichen Werte der Kemtemperatur Tc während des gesamten Verfahrens angibt.

13. Gerät nach Anspruch 12, **dadurch gekennzeichnet, daß** die Steuerungs- und Regelungseinheit (UCG) eine Anzeigeeinrichtung (AFF) und eine Einrichtung zum Eingeben eines Temperaturwerts Ts, der erreicht und während einer Sicherheitsdauer Dmin beizuhalten ist, und einer Endkerntemperatur Tfc in das System umfaßt, die das Ende des Garvorgangs bestimmt.

14. Gerät nach Anspruch 12 oder 13, **dadurch gekennzeichnet, daß** die Fühler, die Sonde (12) und das Heizmodul mit einer Funktionseinheit UNFO verbunden sind, die eine Basiskette darstellt, welche das Messen, das Überwachen und die ständige Regelung der Kerntemperatur Tc eines Garguts oder die Regelung der Kemtemperatur Tc eines Garguts mit Unterbrechung zuläßt sowie den Ausdruck eines Zertifikats ermöglicht, in dem die Werte der Kerntemperatur Tc im betriebsgemäßen Zeitablauf angegeben sind, wobei die Meßsonde (12) mit einem Meßmodul MESSUNG verbunden ist, das einen repräsentativen Wert für die momentane Kerntemperatur Tc bereitstellen kann, wobei dieser Wert ständig oder mit Unterbrechung in einem Modul SPEICHER speicherbar und an einem Modul ANZEIGE anzeigbar ist, das mit dem Modul SPEICHER verbunden ist, welcher mit einem Vergleichsmodul VERGLEICH verbunden ist, das ständig oder mit Unterbrechung Tc und Ts miteinander vergleicht, wobei ein Modul MANUELLE STEUERUNG mit dem Modul SPEICHER verbunden ist, um gewünschte Änderungen von Parametern (Temperatur, Zeitdauer) während des Garvorgangs manuell vornehmen zu können, wobei die Module SPEICHER und VERGLEICH mit dem HEIZMODUL zum Steuern der Heizeinrichtung verbunden sind.

15. Gerät nach dem vorangegangenen Anspruch, **dadurch gekennzeichnet, daß** die Basiskette mit einem internen oder externen RECHNER und mit einem Modul REGELUNG versehen ist, das mit dem Rechner, mit dem Modul MESSUNG und mit dem Modul VERGLEICH verbunden ist, um den Ablauf des Erwärmens und Garens ausgehend von der Temperatur Tc unter Berücksichtigung der Temperatur Ts und abhängig von den Eigenheiten des Erwärmens und des Garens zu steuern, die in einem Speicher oder einem internen oder externen, ortsfesten oder beweglichen Hilfsspeicher gespeichert sind.
